Europäisches Patentamt

European Patent Office

Office européen des brevets

(11) Publication number: **0 237 137**

**A2**

## (12) EUROPEAN PATENT APPLICATION

(21) Application number: 87300046.7

(22) Date of filing: 06.01.87

(51) Int. Cl.³: **B 25 J 11/00**

(30) Priority: 10.01.86 IL 77556

(43) Date of publication of application:
16.09.87 Bulletin 87/38

(84) Designated Contracting States:
AT BE CH DE ES FR GB GR IT LI LU NL SE

(71) Applicant: MEGAR INFORMATION SYSTEMS GRANOT AGRICULTURE COOPERATIVE SOCIETY LTD.

IL-38100 Mobile Post Chefer(IL)

(72) Inventor: Hendel, Mordechai
Kibbutz Mishmar Hasharon
Mobile Post Mishmar Hasharon 60982(IL)

(74) Representative: Barlow, Roy James et al,
J.A.KEMP & CO. 14, South Square Gray's Inn
London WC1R 5EU(GB)

(54) **A mechanical arm and system for utilizing same.**

(57) A mechanical arm for picking up objects from a first location and depositing them in a second location. The arm includes a shoulder joint attachable to a stand and constituting the point of suspension of the arm, at least one pressurized-fluid cylinder arranged, by moving its piston, to extend and retract the mechanical arm in direction of a z-axis, a screw-and-nut translatory mechanism, arranged in series with the cylinder and adapted to selectively act in concert with, or independently of, the pressurized-fluid cylinder to produce the extension and the retraction, a wrist member attached to the lower end of the arm, and a plurality of gripping members articulated to, and tilting as well as rotating together with, the wrist member, and arranged to grip the object for picking it up from the first location, and depositing it at a second location. A system for automated packing of objects according to a preselectable packing pattern is also provided.

Fig.1.

EP 0 237 137 A2

Croydon Printing Company Ltd.

The present invention relates to a mechanical arm for picking up objects from a first location and depositing them in a second location, more particularly for picking up fruit from a conveyor belt and packing it into a box. The invention further relates to a system using such an arm for the automated packing of fruit or other objects according to preselectable packing patterns.

Robots, or robot arms, are known that can pick up, and move, given objects from one place to another. Beyond the confines of robotics laboratories, such robots have so far been used only for very simple assembly and packing tasks, for which the objects to be handled had to be presented to them in orderly, pre-oriented arrangement on special trays or carriers. Even so, these mechanical arms can manipulate only uniform objects of simple shape and well-defined geometry, a task which they are "taught" by being manually led through a picking-up and depositing cycle. The sequence of robot-arm motions required for this cycle is recorded on tape or on another memory device; upon the tape being played back, the arm executes the recorded sequence of motions.

While in recent years work was done to upgrade this type of blind "playback" robot by application of certain pattern-recognition techniques, and algorithms were devised that, incorporated in the software of these robots, would enhance their "intelligence", i.e., their discriminative abilities, applicability of these robots was still very circumscribed by their relatively slow speed, dictated as it was by the inertial masses of their moving components and the practically still acceptable sizes of their motors that set a limit to accelerations, positive or negative. Especially as far as their application for packing operations was concerned, they could not compete economically with manual handling by human packers and, if at all, found use only for work with dangerous substances or in hazardous environments.

It is one of the objects of the present invention to overcome the drawbacks and limitations of prior-art mechanical arms and to provide a relatively inexpensive mechanical arm that will pick up an object of arbitrary shape regardless of its orientation and will deposit it at a predetermined spot in a preselectable orientation; that has a competitive cycle time while using relatively small motors and cylinders, and has a floor-space requirement comparable to that of a human operator.

This the invention achieves by providing a mechanical arm for picking up objects from a first location and depositing them in a second location, comprising:

a shoulder joint attachable to a stand and constituting the point of suspension of said arm, said shoulder joint permitting said arm to tilt about an x-axis and a y-axis, and thus to sweep out a solid angle about said point of suspension;

at least one pressurized-fluid cylinder arranged, by moving its piston, to extend and retract said mechanical arm in direction of a z-axis;

a screw-and-nut translatory mechanism, arranged in series with said cylinder and adapted to add to said extension and said retraction;

a wrist member attached to the lower end of said arm and capable of rotation about said z-axis and of tilting about an axis perpendicular to said z-axis, and

a plurality of gripping members articulated to, and tilting as well as rotating together with, said wrist member, and arranged to grip said object for picking it up from said first location,

wherein said arm, said wrist member, and said gripping members are capable of adjusting and adapting themselves to a random position and orientation of each of the objects to be picked up at said first location, and of readjusting themselves for the well-defined and unique position and orientation of each of said objects in which they are to be deposited at said second location.

The invention further provides a system for automated packing of objects according to preselectable packing patterns, comprising:

at least one conveyor for conveying said objects one by one at given time intervals to a given zone;

a video camera trained on said conveyor belt and feeding a microprocessor unit data concerning at least the configuration and orientation in space of said objects, and

at least one mechanical arm as claimed in claim 1, adapted to pick up said objects within said zone and to deposit them one by one in a container according to one of said preselectable packing patterns.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:-

Figs. 1 to 3 represent different elevations of the mechanical arm according to the invention;

Fig. 4 is a top view of the arm as shown in Fig. 3, but also indicates the respective directions of viewing of Figs. 1 to 3;

Figs. 5A-5E are schematic representations of the mechanical arm in various stages of extension;

Fig.6 is a front elevation of the wrist member and gripper of the mechanical arm according to the invention;

Fig. 7 is a side elevation of the wrist member and gripper of Fig. 6;

Fig. 8 shows a partial view, in cross section, of the gripper- and ejector-actuating mechanism;

Fig. 9 is a schematic representation of the mechanical arm, in which the translatory movement along the z-axis is effected by a single actuator driving a single ball screw,

Fig. 10 is a schematic representation of the setup of a packing system using the mechanical arm according to the invention, and

Figs. 11A-11D illustrate various packing patterns for packing avocado fruit.

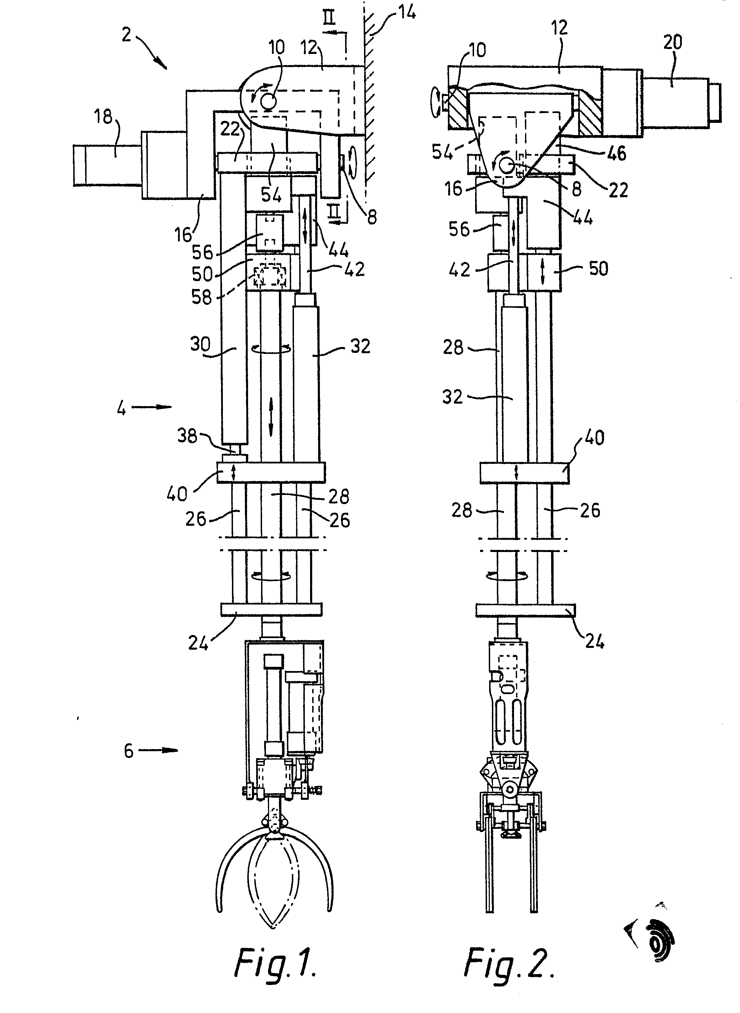

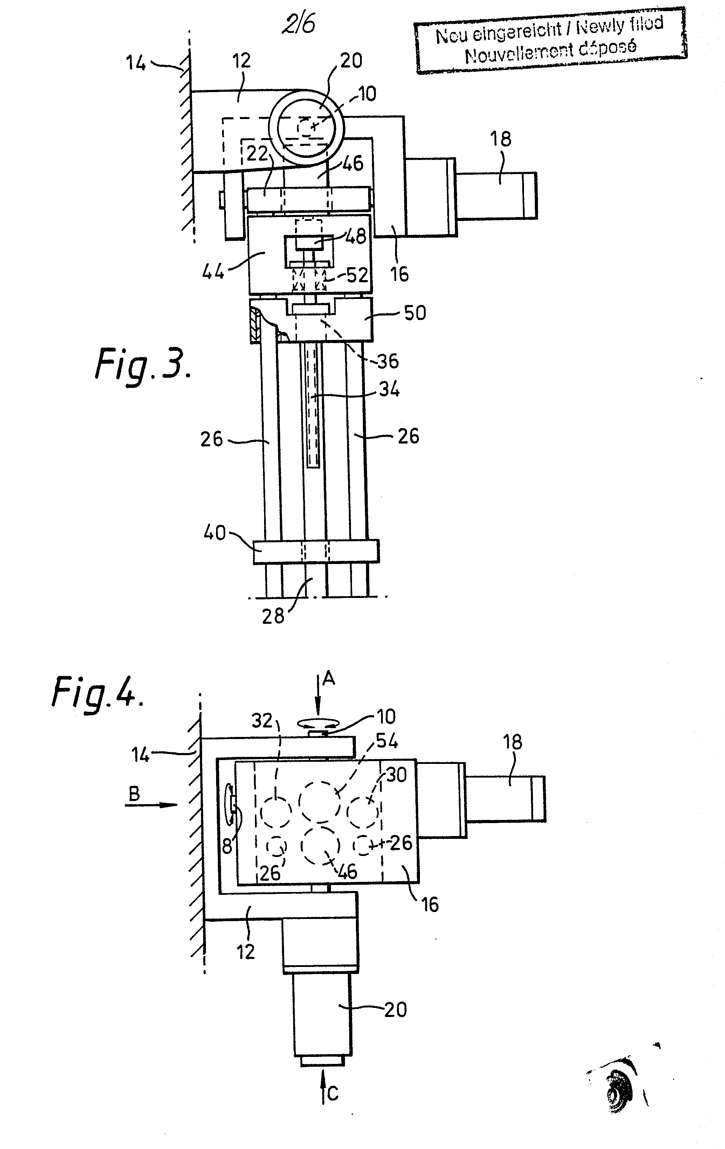

Referring now to the drawings, there is seen in Fig. 1 an elevation of the mechanical arm according to the invention, with other elevations shown in Figs. 2 and 3. A top view of the arm is shown in Fig. 4, arrows A, B and C indicating the respective viewing direction for Figs. 1, 2 and 3.

The mechanical arm according to the invention consists of three main assemblies: the suspension or shoulder joint 2, the arm proper, 4, and the wrist-member and gripper assembly 6.

The suspension 2 is basically of the gimbal type, having two mutually perpendicular geometrical axes, physically realized by an x-axis shaft 8 and a y-axis shaft 10. The latter is mounted in a bracket or frame 12 fixedly attached to a stand 14 symbolized by the shaded strip. The stand may have any convenient shape not interferring with the movements of the arm, such as a cantilever beam attached to an upright or to a nearby wall. The frame 12 may also be attached to the ceiling or to an overhead beam. The x-axis 8 is mounted in a lower frame 16, one limb of which is attached to the y-axis. Both axes are powered by gear motors 18 and 20, respectively.

The arm 4 comprises a top plate 22 and a bottom plate 24 connected to each other by two guide rods 26. The rest of the components, as will be explained in detail further below, are mostly attached to intermediate members slideably mounted on the guide rods 26. The top plate is fixedly attached to the x-axis shaft 8, about which it can tilt. Together with the lower frame 16 it can, however, also tilt about the y-axis 10, thus possessing two degrees of freedom. As these two tilting movements may be performed simultaneously, the arm, including the wrist-member and gripper assembly attached to it in a manner to be explained further below, can "sweep out" a solid angle about its suspension, or, in other words, can describe a surface of a cone, the apex of which is located at the point of suspension.

In addition to the above-mentioned two degrees of freedom in rotation, the arm is also provided with a degree of freedom in translation: it is capable of extending along a z-axis physically realized in the form of a preferably tubular member 28, to the lower end of which is attached the wrist-member and gripper assembly 6.

In the present embodiment, the range of this translatory movement is 0 to 400 mm. For reasons stated earlier, namely in order to obtain relatively high arm movement speeds from relatively small and compact drives, this movement is effected by the combined action of three actuators, two pneumatic and one electrical, the separate movements of which, in a way to be described presently, add up to produce the required extension.

These actuators are one pneumatic cylinder 30 having a stroke of 200 mm, a second pneumatic cylinder, 32, with a stroke length of 100 mm, and a ball screw 34 which, in conjunction with a ball nut 36 provides a movement of up to 100 mm.

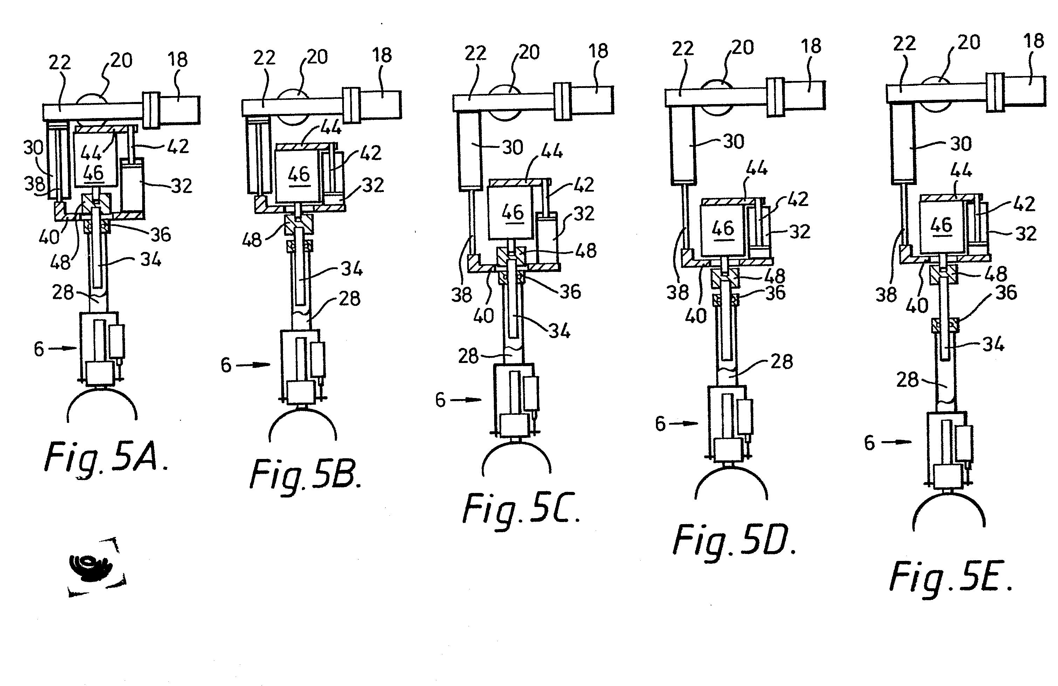

The manner in which these three actuators can add their respective movements is best understood with the aid of the schematic representation of Figs. 5A to 5E.

The bottom end of the cylinder 30 is fixedly attached to the top plate 22, while its piston rod 38 is rigidly connected to an intermediate member 40 slideably mounted on the guide rods 26 (see Figs. 1-3). The bottom end of the shorter-stroke cylinder 32 is fixedly attached to the same intermediate member 40, while its piston rod 42 is rigidly connected to a member 44 slideably mounted on the guide rods 26.

To the same member 44 is fixedly attached an electric motor 46 which, via a flexible coupling 48, drives the ball screw 34. The ball nut 36 is mounted on an intermediate member 50 (seen in Figs. 1 to 3) sliding along the guide rods 26, to which member, in a manner to be explained further below, is also attached the upper end of the z-axis member 28 (in the schematic representation of Figs. 5A-5E, the nut 36 is seen to be directly attached to the z-axis member 28).

In Fig. 5A the mechanical arm is represented in its state of zero extension, as is also the case in Figs. 1 to 3.

In Fig. 5B, the piston of the 100 mm cylinder 32 whose rod 42 is "normally extended" (see Figs. 5A, 1 and 2) is now retracted, pulling down with its rod 42 also the member 44 and the motor 46 and, thereby, also the z-axis member 28 and the wrist-member and gripper assembly 6 attached to its lower end. The mechanical arm has now extended its reach by 100 mm.

In Fig. 5C, the piston rod 42 of the 100 mm-cylinder 32 has returned to its original, extended position, retracting the z-axis member 28 by 100 mm, but at the same time the piston rod 38 of the 200 mm-cylinder has been fully extended, pushing down the intermediate member 40 and everything directly or indirectly carried by this member, that is, cylinder 32, member 44, motor 46, ball screw and nut 34 and 36, 2-axis member 28 and wrist-member assembly 6. The arm has now increased its reach by 200 mm.

In Fig. 5D both cylinders, 30 and 32, have carried out their working stroke, the piston rod 42 of cylinder 32 being now retracted, producing, as in Fig. 5B, an arm extension of 100 mm, and the piston rod 38 of cylinder 30 being now extended as in Fig. 5C, producing on its part an arm extension of 200 mm. These two extensions obviously add up, resulting in a total arm extension of 100+200=300 mm.

In Fig. 5E, cylinders 30 and 32 are in their previous position, (Fig. 5D), in which they produced an extension of 300 mm. But now the electric motor 46 has rotated the ball screw 34 in its (stationary) nut 36, and has thus produced an additional extension. The maximum effective working length of the ball screw 34 being 100 mm, the maximum total extension of the arm is thus 300+100=400 mm. However, while piston movement in the cylinders can only be "all or nothing", i.e., the piston rods 42 and 38 can only be either fully extended or fully retracted, the ball screw 34, which has a pitch of 4 mm, can be rotated by its electric motor 46 any number of turns up to 25 (4x25=100) or even fractions of turns, thus enabling a practically continuous range of extensions betwen 0 and 400 mm. An extension of, for example, 216 mm would be produced by the cylinders 30 and 32 assuming the state illustrated in Fig. 5C, and the ball screw 34 being given 4 turns (4x4=16). It should be understood that the three additive movements (cylinders 30, 32 and ball screw 34) take place simultaneously, hence the relatively high arm extension and retraction speed produced by these three separate, relatively small and compact drives.

Returning now to Figs. 1 to 4, there is provided, in addition to the components already mentioned in conjunction with Figs 5A-5E, a ball-screw housing comprising a ball bearing 52 mounted in the member 44, as clearly seen in Fig. 3.

As Figs. 5A-5E were only concerned with the illustration of how a rapid translatory movement in direction of the z-axis was achieved by addition of the respective movements of three different elements (two pneumatic cylinders and one ball screw), no reference is made in these drawings to a further degree of freedom required of the z-axis member 28: it must also be capable of providing the rotary movement demanded of the wrist-member and gripper assembly which must first adapt itself to the random orientation of the fruit brought on for packing, and then to the orientation prescribed by a predetermined packing pattern.

This requirement is met by a gear motor 54, mounted on, and moving together with, the member 50, and driving the z-axis member 28 via a flexible coupling 56 (Figs. 1 and 2). The end portion of the z-axis member 28 is mounted in the member 50 with the aid of a ball bearing 58.

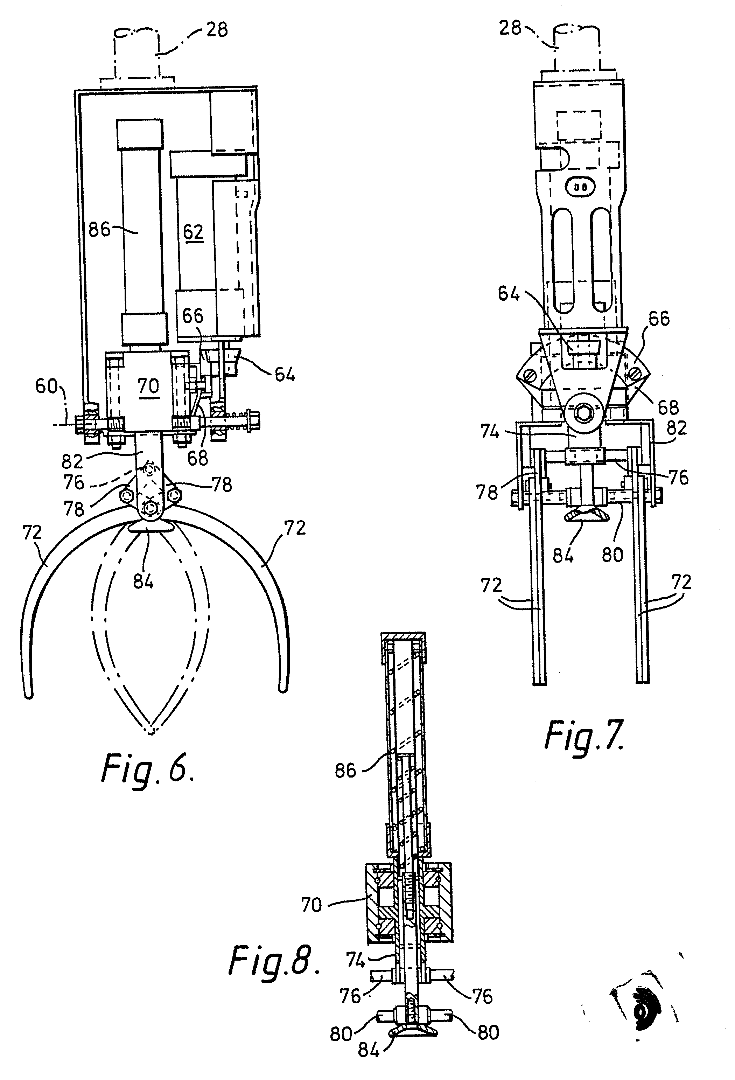

The wrist-member and gripper assembly 6 is shown in Figs. 6 and 7. It is attached to the lower end of the z-axis member 28 and its task is to pick up the fruit from a moving conveyor and deposit it in a container according to a predetermined packing pattern. To this end it has to have, in addition to the four degrees of freedom of the arm proper (tilt about x- and y-axis, translation along, and rotation about, z-axis), one degree of freedom of rotation or swivel about the wrist axis 60. This swivel movement is effected by an electric motor 62 driving a bevel gear 64 which engages a gear segment 66 the center of which lies on the wrist axis 60, and which is mounted on a carrier 68 attached to a double-acting pneumatic cylinder 70 (see also Fig. 8) which opens and closes the gripper jaws 72, of which there are four, two on each side. This is effected by the piston rod 74 (hollow for a purpose to be explained further below) pushing down, or pulling up a pair of rods 76, to which are hinged links 78 that are articulated to the upper ends of the jaws 72. The latter are mounted, scissor-like, at the ends of rods 80 supported by a fork 82. It is clearly seen, particularly from Fig. 6, that when the piston rod 74 pushes the rods 76 downwards (while the rods 80, held by the fork 82,

0237137

are stationary), the jaws 72 will close, and that pulling up the rods 76 will cause the closed jaws to open.

There is further seen an ejector 84 whose task it is to "shoot" the fruit into its final location in the container, once the fruit, held between the jaws 72, has been properly oriented and swung into a position close to this final location. The ejector 84 is actuated by a telescoping spring-return cylinder 86 acting through the hollow piston rod 74 of the double-acting cylinder 70 and capable of providing a stroke much larger than the actual length of the cylinder. A large stroke is required to permit the ejector 84 to stay in contact with the fruit until the latter is in place, in order to prevent bounce.

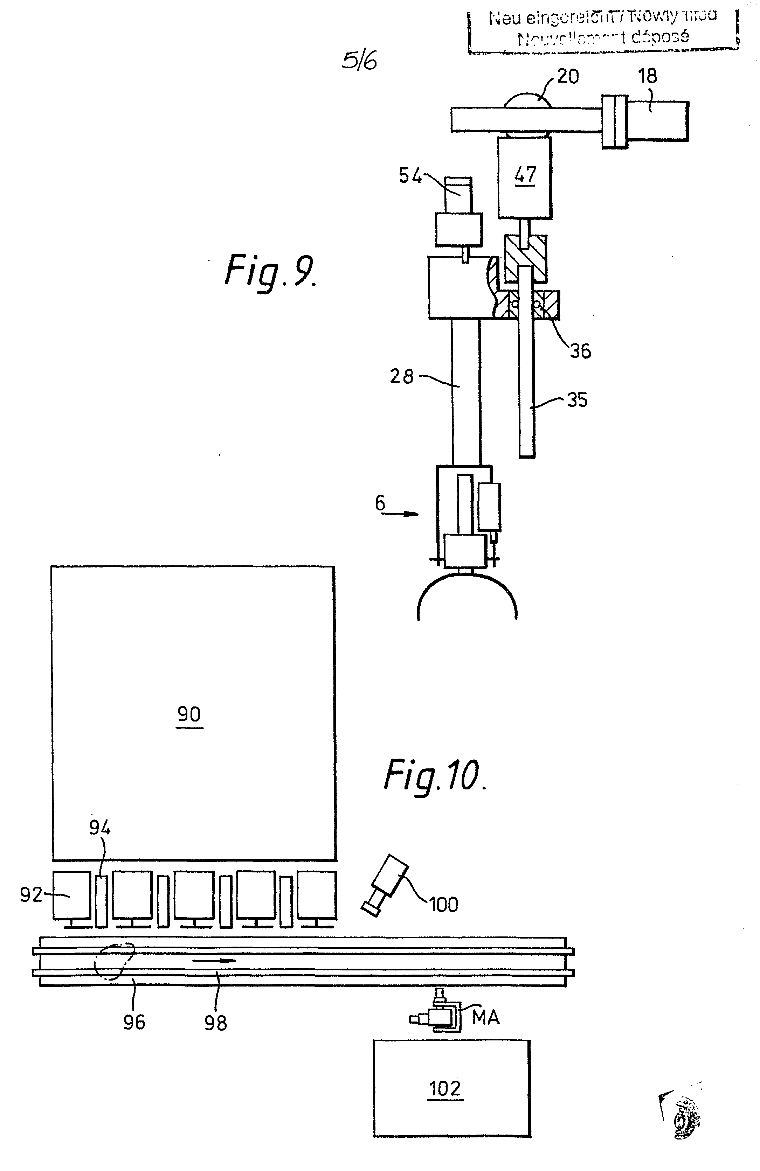

While in the embodiment discussed so far the translatory movement along the z-axis was effected by the selective action of three different actuators, two pneumatic and one electrical, recent advances in motor design, which have enhanced specific output, i.e., output per unit weight and/or volume, favor, in some applications, the replacement of the three different actuators - 30, 32, 46- by one single actuator, an electric motor which drives a single ball screw of sufficient length to afford control over the entire z-axis range, in this case 400 mm, without impairment of handling speed and accuracy. A schematic representation of this variant is seen in Fig. 9, showing the electric motor 47 and the long ball screw 35. The smaller motor to the left is motor 54, which controls the rotary movement about the z-axis.

Fig. 10 schematically illustrates a fruit-packing system using the mechanical arm according to the invention. The components shown in schematic top view include a fruit hopper 90 with an inclined bottom, a row of equally inclined rollers all rotating in the same sense between each two of which the fruit is kept in motion, promoting their sliding forward, tilting fingers 94 between each pair of rollers 92, which fingers can be made to tilt up and tip the fruit onto a conveyor belt 96 moving continuously in direction of the arrow, where it comes to rest—in random orientation - between two foam rubber ridges 98 moving with the belt, a video-camera 100 located vertically above the longitudinal center line of the belt 96, a platform 102 onto which is placed the container to be packed, and the mechanical arm MA. During packing, the platform is tilted to include a compound angle with the horizontal, that is, each of its corners is at a different height with respect to the horizontal. Packing begins at the lowermost corner. Tilting is effected by two pneumatic cylinders, or one cylinder and a hinge the axis of which is oblique with respect to the sides of the rectangular platform. For removal of packed containers and placing of empty ones, the above-mentioned compound angle is reduced to zero.

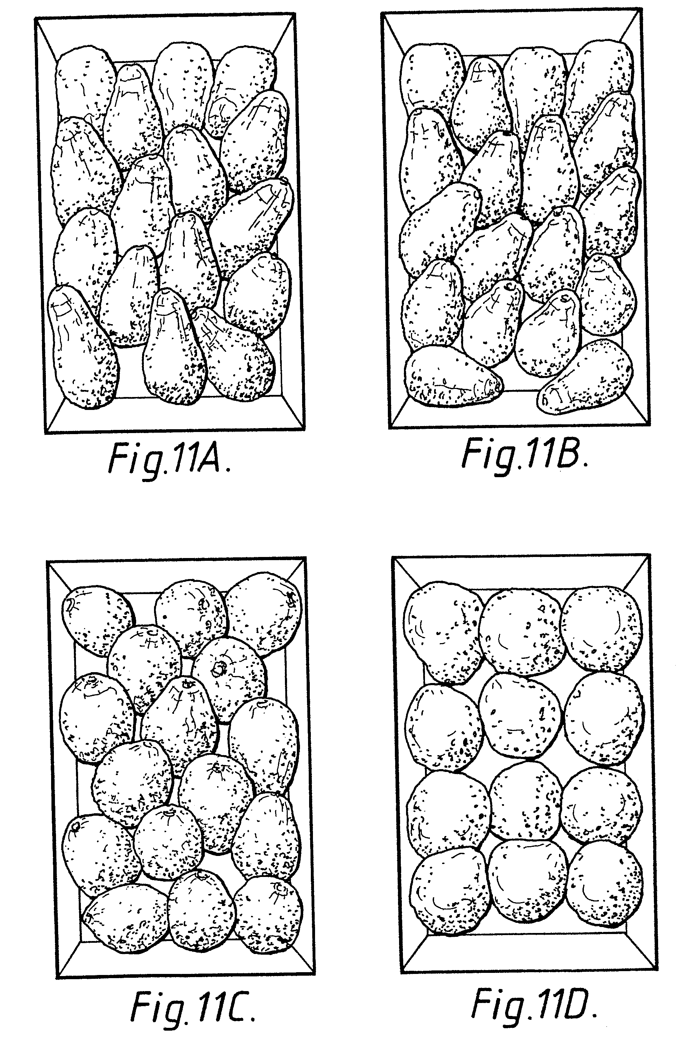

In operation, the fruit tipped onto the conveyer belt 96 at timed intervals travels in direction of the arrow and is "seen" by the camera 100. The optical image is electronically scanned and analyzed in a microprocessor, where appropriate algorithms permit the real-time determination of 1) the general configuration of the fruit, 2) the orientation of its major axis, 3) the approximate location, along that axis, of its center of gravity. The mechanical arm, on its return swing from the depositing of the previous fruit, is given this information and adjusts its orientation accordingly, and picks up the fruit at a point along the conveyor 96, the precise location of which point depends on the distance the wrist and gripper unit 6 has to travel from its last depositing location, the microprocessor taking into account this distance, the tilting speed of the arm and the traveling speed of the fruit. Once gripped, (in such a way that the ejector 84 comes to contact the fruit directly above its center of gravity), the fruit is reoriented by tilt of the wrist and rotation of the z-axis member 28 to conform to the demands of a predetermined packing pattern (examples of which are shown in Figs. 11A-11D), which also includes the decision whether the broad or the pointed end should lead, as well as the angle, with respect to the container bottom, of the longitudinal axis of the fruit. Having been swung into depositing position, the fruit is "shot" into its intended location by the ejector 84 (Figs. 6 to 8) at an acceleration larger than g, to prevent free fall from affecting the final location and orientation of the fruit. At the instant of ejection, pressure in the cylinder 70 is vented, so that the ejected fruit can easily spread the grippers. As the ejector 84 is applied in a transverse plane containing the above-mentioned center of gravity, there is no tendency for the fruit to tilt during ejection, and the preadjusted orientation is thus preserved. Also, as already mentioned, the ejector stays with the fruit until it is finally deposited, to prevent bouncing. After the initial "shot", pressure on the ejector is reduced to prevent damage to the fruit.

Figs. 11A to 11D represent examples of packing patterns selected according to the size and configuration of the fruit to be packed, with a view of accommodating in a standard container an optimal number of fruits.

If only one mechanical arm is used, the fruit in the hopper 90 is preferably preclassified according to the above-mentioned criteria. It is, however, possible to use a number of mechanical arms along the same conveyor, in which case each mechanical arm will pick up only that type or grade of fruit it is programmed for, thus also working as classifier.

While in the embodiment shown the x- and y-axes are seen to be located in different planes, suspensions are also envisaged in which these two axes are co-planar.

It should be understood that the numerical data referring to the range of arm extension was given for purpose of better understanding of the additive principle only and are not to be seen as exclusive or even preferable.

It will be evident to those skilled in the art that the invention is not limited to the details of the foregoing illustrative embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

CLAIMS

1. A mechanical arm for picking up objects from a first location and depositing them in a second location, comprising:

a shoulder joint attachable to a stand and constituting the point of suspension of said arm, said shoulder joint permitting said arm to tilt about an x-axis and a y-axis, and thus to sweep out a solid angle about said point of suspension;

at least one pressurized-fluid cylinder arranged, by moving its piston, to extend and retract said mechanical arm in direction of a z-axis;

a screw-and-nut translatory mechanism, arranged in series with said cylinder and adapted to selectively act in concert with, or independently of, said pressurised-fluid cylinder to produce said extension and said retraction,

a wrist member attached to the lower end of said arm and capable of rotation about said z-axis and of tilting about an axis perpendicular to said z-axis, and

a plurality of gripping members articulated to, and tilting as well as rotating together with, said wrist member, and arranged to grip said object for picking it up from said first location,

wherein said arm, said wrist member, and said gripping members are capable of adjusting and adapting themselves to a random position and orientation of each of the objects to be picked up at said first location, and of readjusting themselves for the well-defined and unique position and orientation of each of said objects in which they are to be deposited at said second location.

2. A mechanical arm for picking up objects from a first location and depositing them in a second location, comprising:

a shoulder joint attachable to a stand and constituting the point of suspension of said arm, said shoulder joint permitting said arm to tilt about an x-axis and a y-axis, and thus to sweep out a solid angle about said point of suspension;

a screw-and-nut translatory mechanism, adapted to extend and retract said mechanical arm in direction of a z-axis;

a wrist member attached to the lower end of said arm and capable of rotation about said z-axis and of tilting about an axis perpendicular to said z-axis, and

a plurality of gripping members articulated to, and tilting as well as rotating together with, said wrist member, and arranged to grip said object for picking it up from said first location,

wherein said arm, said wrist member, and said gripping members are capable of adjusting and adapting themselves to a random position and orientation of each of the objects to be picked up at said first location, and of readjusting themselves for the well-defined and unique position and orientation of each of said objects in which they are to be deposited at said second location.

3. The mechanical arm as claimed in claims 1 or 2 further comprising an ejector member mounted in said wrist member and adapted to eject said object from the grip of said gripping members for depositing it in said second location,.

4.   The mechanical arm as claimed in claim 1, further comprising a second pressurized-fluid cylinder serially interposed between said first cylinder and said screw-and-nut translatory mechanism.

5.   The mechanical arm as claimed in claims 1 or 2, further comprising electric motors for powering said x- and y-axis tilt, said z-axis rotation, said screw-and-nut translatory mechanism, and said wrist tilt.

6.   The mechanical arm as claimed in claim 3, wherein said ejector is actuated by a pressurized-fluid cylinder.

7.   The mechanical arm as claimed in claim 1, wherein said pressurized fluid is compressed air.

8.   A system for automated packing of objects according to preselectable packing patterns, comprising:

at least one conveyer for conveying said objects one by one at given time intervals to a given zone;

a video camera trained on said conveyer belt and feeding a microprocessor unit data concerning at least the configuration and orientation in space of said objects, and

at least one mechanical arm as claimed in claims 1 or 2, adapted to pick up said objects within said zone and to deposit them in a container according to one of said preselectable packing patterns.

9.   The system as claimed in claim 8, further comprising a holding platform for a rectangular container to be filled, said platform being adapted to assume a position in which its surface includes a compound angle with the horizontal plane, such that each corner of the bottom of said container is at a different height with respect to said horizontal plane.

10. The system as claimed in claim 8, wherein said compound angle is controlled by means of two pneumatic cylinders and can be reduced to zero for removal of a filled container and the placing of an empty container.

Neu eingereicht / Newly filed
Nouvellement déposé

Fig.1.

Fig.2.

Neu eingereicht / Newly filed
Nouvellement déposé

**Fig.3.**

**Fig.4.**

Fig.5A.

Fig.5B.

Fig.5C.

Fig.5D.

Fig.5E.

Neu eingereicht / Newly filed
Nouvellement déposé

0237137

Neu eingereicht / Newly filed
Nouvellement déposé

Fig. 6.

Fig. 7.

Fig. 8.

Neu eingereicht / Nowy tirso
Nouvellement déposé

Fig.9.

Fig.10.

Neu eingereicht 0237137
Nouvellement déposé

Fig.11A.

Fig.11B.

Fig.11C.

Fig.11D.